# EUROPÄISCHE PATENTANMELDUNG

(11) **EP 4 671 032 A1**
(43) Veröffentlichungstag der Anmeldung: **31.12.2025**
(21) Anmeldenummer: 24185299.5
(22) Anmeldetag: 28.06.2024
(51) Int. Cl.: B60L 15/20, H02P 23/20, B60L 13/06

(54) **BEREITSTELLUNG MINDESTENS EINES SOLLDREHZAHLVERLAUFS FÜR MINDESTENS EINEN ANTRIEB EINES SCHIENENGEFÜHRTEN TRANSPORTGERÄTES**

(71) Anmelder: Siemens Aktiengesellschaft, 80333 München (DE)
(72) Erfinder: Vogel, Theo, 91327 Gößweinstein (DE); Gumbrecht, Stefan, 91086 Aurachtal (DE); Hamm, Carsten, 91330 Eggolsheim (DE)
(74) Vertreter: Siemens Patent Attorneys

(57) **Zusammenfassung**

Die Erfindung betrifft ein Verfahren sowie eine zugehörige Steuerungseinrichtung zur Bereitstellung mindestens eines Solldrehzahlverlaufs für mindestens einen Antrieb eines schienengeführten Transportgerätes, aufweisend folgende Schritte:
- Vorgabe eines Geschwindigkeitsverlaufs eines virtuellen Punktes des schienengeführten Transportgerätes;
- wobei eine Kurve durch das schienengeführten Transportgerätes mittels eines Vorderrads und eines Hinterrads derart durchlaufbar ist, dass der virtuelle Punkt im Wesentlichen horizontal versetzt zu einem Schienenführungssystems liegt;
- Ermittlung des mindestens einen Solldrehzahlverlaufs in Abhängigkeit von dem Geschwindigkeitsverlauf und einer Relativposition von dem virtuellen Punkt zu einer von dem Antrieb angetriebenen Komponente des schienengeführten Transportgerätes, einer Schienengeometrie und einem Achsabstand.

## Beschreibung

Die Erfindung betrifft ein Verfahren zur Bereitstellung mindestens eines Solldrehzahlverlaufs für mindestens einen Antrieb eines schienengeführten Transportgerätes sowie eine zugehörige Steuerungseinrichtung sowie ein zugehöriges Computerprogramm.

Schienengeführte Transportgeräte, wie beispielsweise Regalbediengeräte, werden für zahlreiche Anwendungen in der Intralogistik eingesetzt, insbesondere zum Transport und Umlagern von Waren in Hochregallagern. Es handelt sich in der Regel um schienengeführte Fahrzeuge, die je nach Anwendungsfall auch um Kurven fahren. Dazu sind die Schienen mit vorgegebenen Radien verlegt und das Regalbediengerät durchfährt diese. Dabei befindet sich der Masten, der in der Regel annähernd mittig zwischen Vorder- und Hinterrad angebracht ist und der für die Aufnahme von Waren oder Gütern oder Kartons vorgesehen ist, zwischenzeitlich seitlich verlagert zum Schienensystem.

Bei Regalbediengeräten kommt es während einer Kurvenfahrt ohne weitere Maßnahmen zu größeren unstetigen Beschleunigungen am Mast. Mit herkömmlicher Bewegungssteuerung erreicht man bislang mit schnellerer Fahrt einen höheren Durchsatz, mit langsamerer Fahrt weniger Beanspruchung und höhere Sicherheit für das Transportgut.

Vor diesem Hintergrund ist es eine Aufgabe der vorliegenden Erfindung eine verbesserte Bewegungssteuerung für ein schienengeführtes Transportgerät bereitzustellen. Diese Aufgabe wird durch die Merkmale der unabhängigen Ansprüche gelöst. Vorteilhafte Ausgestaltungen sind in den abhängigen Ansprüchen angegeben.

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zur Bereitstellung mindestens eines Solldrehzahlverlaufs für mindestens einen Antrieb eines schienengeführten Transportgerätes, aufweisend folgende Schritte:
- Vorgabe eines Geschwindigkeitsverlaufs eines virtuellen Punktes des schienengeführten Transportgerätes;
- wobei eine Kurve durch das schienengeführte Transportgerät mittels eines Vorderrads und eines Hinterrads derart durchlaufbar ist, dass der virtuelle Punkt im Wesentlichen horizontal versetzt zu einem Schienenführungssystems liegt;
- Ermittlung des mindestens einen Solldrehzahlverlaufs in Abhängigkeit von dem Geschwindigkeitsverlauf und einer Relativposition von dem virtuellen Punkt zu einer von dem Antrieb angetriebenen Komponente des schienengeführten Transportgerätes, einer Schienengeometrie und einem Achsabstand.

Es wird somit entgegen der herkömmlichen Vorgabe einer Geschwindigkeit an einem Rad ein Geschwindigkeitsverlauf an einem virtuellen Punkt, beispielsweise zwischen Vorderrad und Hinterrad, vorgegeben. Dadurch wird die Geschwindigkeit an einer Stelle vorgegeben, die beim Durchfahren der Kurve von besonderer Relevanz ist: je nach Anwendung ist es von Interesse, eine Geschwindigkeit an applikationsabhängig variierenden Positionen zwischen Vorderrad und Hinterrad vorzugeben, um eine möglichst beschleunigungsstetige oder ruckfreie Bewegung an dieser Stelle zu bekommen. Von Interesse sind hier insbesondere je nach Applikation Bereiche rund um einen Schwerpunkt eines Masts eines Regalbediengerätes. Der virtuelle Punkt liegt bei der Kurvenfahrt im Wesentlichen nicht auf dem Schienensystem, sondern horizontal versetzt. Bei Anwendungen mit einem gegenüber dem Verbindungsstrang zwischen Vorderrad und Hinterrad versetztem virtuellen Punkt überfährt der virtuelle Punkt geometriebedingt kurzzeitig das Schienensystem bei der Kurvenfahrt, liegt aber somit im Wesentlichen ebenfalls horizontal versetzt.

Darüber hinaus wird für den virtuellen Punkt ein Verlauf einer Geschwindigkeit oder eine Geschwindigkeit vorgegeben. So kann eine optimierte Drehzahltrajektorie abhängig von der Relativposition von dem virtuellen Punkt zu einer von dem Antrieb angetriebenen Komponente des schienengeführten Transportgerätes, beispielsweise dem Abstand vom Vorderrad zum Schwerpunkt des schienengeführten Transportgerätes, von der Schienengeometrie und dem Achsabstand ermittelt werden.

Der virtuelle Punkt ist beispielsweise mittig oder annähernd mittig zwischen Vorderrad und Hinterrad angeordnet. Der virtuelle Punkt befindet sich beispielsweise in einem Bereich von ca. +/-20% um den Mittelpunkt der Achse zwischen und Vorderrad und Hinterrad.

Statt die Drehzahl beim gesamten Durchlaufen der Kurve sehr stark reduzieren zu müssen, oder sogar zwei Fahrwerksmotoren verbauen zu müssen, damit der Drehzahlhauptsollwert zwischen zwei Antrieben umgeschaltet werden kann, ist es durch das beschriebene Verfahren möglich auch mit nur einem Fahrwerksmotor auszukommen und dennoch eine möglichst geringe Anregung eines Masts zu erreichen. Dabei wird der Fahrwerksmotor je nach Position innerhalb der Kurve in seiner eigentlichen Solldrehzahl so manipuliert, dass die Anregung eines Masts und/oder einer Gabel des schienengeführten Transportgerätes oder Regalbediengerätes oder des zu transportierenden Guts möglichst gering ist.

Beispielsweise handelt es sich um eine Kurve, wobei die Fahrtabschnittsstrecken vor und nach der Kurve in einem Winkel von 90° zueinanderstehen. Es wird dann der Radius der Biegung zwischen den beiden geraden Streckenabschnitten als Schienengeometrie vorgegeben.

Somit wird ein Regalbediengerät vorteilhaft mit möglichst geringem Zeitverlust in der Kurve betrieben. Vorteilhafterweise wird durch die Beschleunigungs- und/ oder Ruck-optimierte Fahrweise die Mechanik möglichst wenig beansprucht. Die Kosten für eingesetzte Hardware und Mechanik ist dennoch vergleichbar mit herkömmlichen Regalbediengeräten, da kein zusätzlicher Motor für ein weiteres angetriebenes Laufrad nötig ist.

Gemäß einer Ausgestaltung entspricht der virtuelle Punkt einer Position des Schwerpunktes des schienengeführten Transportgerätes abgebildet auf eine Verbindungslinie zwischen Vorderrad und Hinterrad.

Somit wird vorteilhaft die Mechanik des gesamten schienengeführten Transportgerätes mit einbezogen in die Vorgabe des Geschwindigkeitsverlaufs des virtuellen Punktes. Es wird somit an dem Punkt entlang eines Balkens des schienengeführten Transportgerätes, an dem oder räumlich über dem der Schwerpunkt liegt, der Geschwindigkeitsbetrag vorgegeben, insbesondere konstant gehalten. In Anwendungen liegt dieser Schwerpunkt beispielsweise mittig zwischen Vorderrad und Hinterrad.

Gemäß einer Ausgestaltung entspricht der virtuelle Punkt einer Position des Schwerpunktes eines Masts des schienengeführten Transportgerätes abgebildet auf eine Verbindungslinie zwischen Vorderrad und Hinterrad. Je nach Ausgestaltung der Mechanik kann so der Mast selbst mit Aufnahmewerkzeugen für die Ermittlung des virtuellen Punktes einbezogen werden.

Gemäß einer Ausgestaltung entspricht der virtuelle Punkt einer Position eines Ansatzpunktes eines Masts an einer mechanischen Verbindungsachse zwischen Vorderrad und Hinterrad. Somit kann mit vereinfachenden Annahmen die Bewegung inklusive der dynamischen Grenzen für Beschleunigungen am Mast vorgegeben werden, also am kritischen Teil des Wagens. Die Drehzahl am Antriebsrad resultiert aus der Umrechnung dieser Vorgabe auf die Motoren.

Gemäß einer Ausgestaltung wird der Geschwindigkeitsverlauf des virtuellen Punktes als Verlauf mit konstantem Geschwindigkeitsbetrag vorgegeben. Die Richtung der Geschwindigkeit am virtuellen Punkt ergibt sich zwangsläufig aus der Kurvengeometrie und dem Achsabstand. Durch die Vorgabe eines konstanten Geschwindigkeitsbetrags sind Beschleunigungssprünge durch Richtungsänderungen bei Einfahren in und Ausfahren aus der Kurve zwar weiterhin vorhanden, aber deutlich reduziert gegenüber den Beschleunigungssprüngen bei konstanter Geschwindigkeit eines Vorderrads oder Hinterrads des schienengeführten Transportgerätes.

Gemäß einer Ausgestaltung wird der Solldrehzahlverlauf einem Rad des schienengeführten Transportgerätes, insbesondere einem Vorderrad oder einem Hinterrad, als angetriebene Komponente ausgegeben. Somit ist das Verfahren vorteilhaft für gängige Regalbediengeräte mit angetriebenem Vorderrad einsetzbar. Auch hybride Ansteuerung mit sowohl der Möglichkeit, die Geschwindigkeit am Vorderrad vorzugeben, als auch am virtuellen Punkt, sind realisierbar.

Gemäß einer Ausgestaltung wird ein für den virtuellen Punkt optimierter Geschwindigkeitsverlauf ermittelt unter Berücksichtigung von Beschleunigungsgrenzen einer Beschleunigung des virtuellen Punktes. Somit kann das Geschwindigkeitsprofil weiter angepasst werden, so dass vorgebbare Obergrenzen der Beschleunigung eingehalten werden.

Gemäß einer Ausgestaltung wird ein für den virtuellen Punkt optimierter Geschwindigkeitsverlauf ermittelt unter Berücksichtigung von Ruckbegrenzungen des virtuellen Punktes. Ferner können vorgebbare Obergrenzen für einen während der Bewegung am virtuellen Punkt entstehenden Ruck durch weitere Anpassungen eingehalten werden.

Gemäß einer Ausgestaltung resultiert eine Drehzahl an der angetriebenen Komponente aus der Umrechnung des Solldrehzahlverlaufs auf einen Motor unter Berücksichtigung der Beschleunigungsgrenzen und/ oder der Ruckbegrenzungen. Der Solldrehzahlverlauf wird somit aus dem optimierten Geschwindigkeitsverlauf ermittelt.

Gemäß einer Ausgestaltung ist ferner eine weitere angetriebene Komponente des schienengeführten Transportgerätes, insbesondere zusätzlich zu einem Vorderrad ein Hinterrad oder zusätzlich zu einem Hinterrad ein Vorderrad, vorgesehen und ein weiterer Solldrehzahlverlauf für einen weiteren Antrieb der weiteren angetriebenen Komponente wird aus dem Solldrehzahlverlauf des Antriebs, der Schienengeometrie und dem Achsabstand ermittelt. Vorteilhafterweise teilt sich bei einem angetriebenen zweiten Rad die Beschleunigung des schienengeführten Transportgerätes auf Vorder- und Hinterrad auf.

Gemäß einer Ausgestaltung ist eine weitere angetriebene Komponente des schienengeführten Transportgerätes, insbesondere zusätzlich zu einem Vorderrad ein Hinterrad oder zusätzlich zu einem Hinterrad ein Vorderrad, vorgesehen und ein weiterer Solldrehzahlverlauf wird aus dem Geschwindigkeitsverlauf und einer Relativposition von dem virtuellen Punkt zu der weiteren angetriebenen Komponente des schienengeführten Transportgerätes, einer Schienengeometrie und einem Achsabstand ermittelt. Alternativ zur Umrechnung aus dem nur für einen Antrieb berechneten Drehzahlprofil kann somit auch eine direkte Berechnung für beide Antriebe parallel erfolgen.

Die Erfindung betrifft ferner eine Steuerungseinrichtung zur Bereitstellung mindestens eines Solldrehzahlverlaufs für mindestens einen Antrieb eines schienengeführten Transportgerätes, ausgebildet und eingerichtet zum:
- Erhalten eines vorgegebenen Geschwindigkeitsverlaufs eines virtuellen Punktes des schienengeführten Transportgerätes;
- wobei eine Kurve durch das schienengeführte Transportgerätmittels eines Vorderrads und eines Hinterrads derart durchlaufbar ist, dass der virtuelle Punkt im Wesentlichen horizontal versetzt zu einem Schienenführungssystems liegt,
- Ermitteln des mindestens einen Solldrehzahlverlaufs in Abhängigkeit von dem Geschwindigkeitsverlauf und einer Relativposition von dem virtuellen Punkt zu einer von dem Antrieb angetriebenen Komponente des schienengeführten Transportgerätes, einer Schienengeometrie und einem Achsabstand.

Gemäß einer Ausgestaltung ist die Steuerungseinrichtung ferner ausgebildet und eingerichtet zum Durchführen des Verfahrens nach einer der obigen Ausgestaltungen.

Die Erfindung betrifft ferner ein Computerprogramm, umfassend Befehle, die bei der Ausführung des Programms durch einen Computer diesen veranlassen, das Verfahren nach einem der obigen Ausgestaltungen auszuführen, wobei das Computerprogramm insbesondere auf einer virtuellen Steuerung zur Ausführung gebracht wird.

Die Erfindung wird nachfolgend anhand von Ausführungsbeispielen mit Hilfe der Figuren näher erläutert. Es zeigen:
Figur 1 eine schematische Darstellung eines Regalbediengerätes zur Veranschaulichung einer Kurvenfahrt;
Figur 2 eine schematische Darstellung eines Diagramms zur Veranschaulichung der Bahngeschwindigkeiten eines Regalbediengerätes bei einer Kurvenfahrt gemäß dem Stand der Technik;
Figur 3 eine schematische Darstellung eines Diagramms zur Veranschaulichung der wirkenden Beschleunigungen bei einem Regalbediengerät gemäß dem Stand der Technik;
Figur 4 eine schematische Darstellung eines Diagramms zur Veranschaulichung der wirkenden Beschleunigungsanteile am Mast bei einem Regalbediengerät gemäß dem Stand der Technik;
Figur 5 eine schematische Darstellung eines Diagramms zur Veranschaulichung der Geschwindigkeitsverläufe eines Regalbediengerätes bei einer Kurvenfahrt gemäß einem ersten Ausführungsbeispiel der Erfindung;
Figur 6 eine schematische Darstellung eines Diagramms zur Veranschaulichung der wirkenden Beschleunigungsanteile am Mast bei einem Regalbediengerät gemäß dem ersten Ausführungsbeispiel.

In den Figuren sind funktionsgleiche Elemente mit denselben Bezugszeichen versehen, sofern nichts anderes angegeben ist.

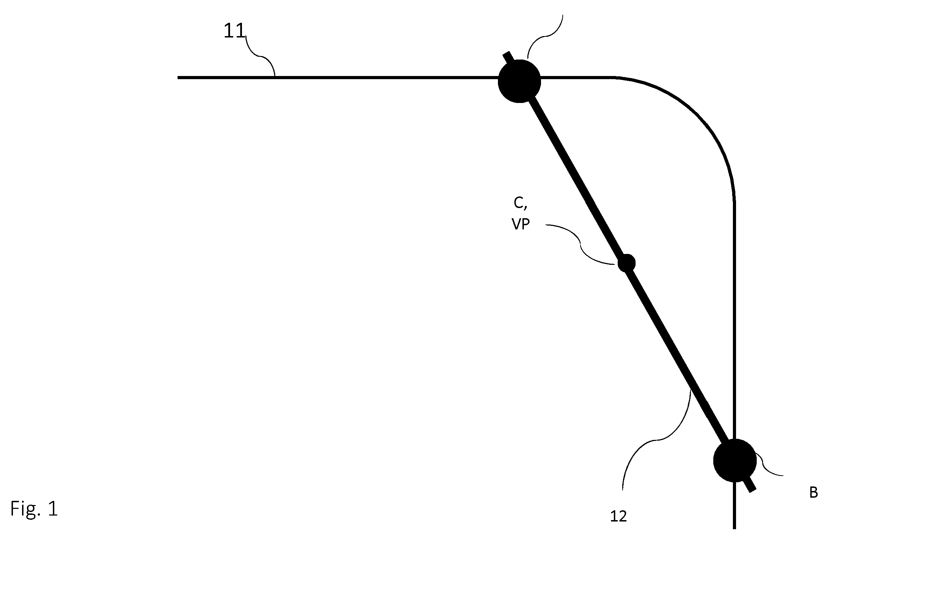

Figur 1 zeigt schematisch den Aufbau eines Regalbediengerätes 12 mit Vorderrad A, Hinterrad B, Mast C. Während der Fahrt auf dem Schienensystem 11 durchläuft das Regalbediengerät je nach Schienengeometrie die gebogene Kurve, im beispielshaft gezeigten Fall zunächst mit dem Vorderrad A und erst nachdem das Vorderrad A wieder aus der Kurve ausgefahren ist mit dem Hinterrad B.

In Figur 2 ist ein Diagramm dargestellt, das die Geschwindigkeiten aufgetragen auf der Geschwindigkeitsachse v-a an Vorderrad A, Hinterrad B und Mast C des Regalbediengerätes 12 über der Zeit t-a zeigt, wie es aus dem Stand der Technik bekannt ist. Es ist zu erkennen, dass die Geschwindigkeit am Vorderrad A konstant ist. Diese wird dort vorgegeben, sodass das Regalbediengerät mit konstanter Drehzahl am Vorderrad A verfahren wird. Während der abgebildeten Zeitspanne durchläuft das Regalbediengerät 12 wie anhand von Figur 1 gezeigt eine Kurve, wobei zunächst das Vorderrad A in die Kurve einfährt, anschließend sich der gesamte Bereich zwischen Vorderrad A und Hinterrad B seitlich versetzt zum gebogenen Schienensystem befindet, das Vorderrad A wieder aus der Kurve ausfährt und schließlich noch das Hinterrad B in die Kurve ein- und wieder ausfährt. Je nachdem, wie groß ein Kurvenradius im Verhältnis zur Länge des Regalbediengerätes 12, also zum Abstand zwischen vorderem Ende bzw. Vorderrad A und hinterem Ende bzw. Hinterrad B, ist, befinden sich Vorderrad A und Hinterrad B überlappungsweise gleichzeitig in der Kurve oder durchlaufen diese wie oben beschrieben hintereinander.

Der Geschwindigkeitsverlauf a am Vorderrad ist konstant. Zur Zeit t=1 fährt das Vorderrad A in die Kurve ein. Der Geschwindigkeitsverlauf b am Hinterrad B zeigt ab da eine zunächst fallende und dann ab ca. t=2,5, wenn das Vorderrad A aus der Kurve ausfährt, zunehmende Geschwindigkeit. Eine Spitze zeigt der Geschwindigkeitsverlauf b an der Stelle bei ca. t=6,5, an der das Hinterrad B in die Kurve einfährt. Hier wird das Regalbediengerät bei konstanter Geschwindigkeit des Vorderrads A quasi um die Kurve gerissen.

Vom Verlauf her analog, jedoch in den Extremalwerten etwas weniger stark ausgeprägt, verhält sich der Geschwindigkeitsverlauf c am Mast C. Im Beispiel ist der Mast C genau in der Mitte zwischen Vorderrad A und Hinterrad B und aufgrund der Geometrie des Regalbediengerätes 12 liegt hier auch der Schwerpunkt des gesamten Regalbediengerätes 12. Es sind konstruktiv bedingt verschiedene Szenarien vorstellbar, bei denen der Mast C weiter in Richtung des Vorderrads oder Hinterrads angebracht ist.

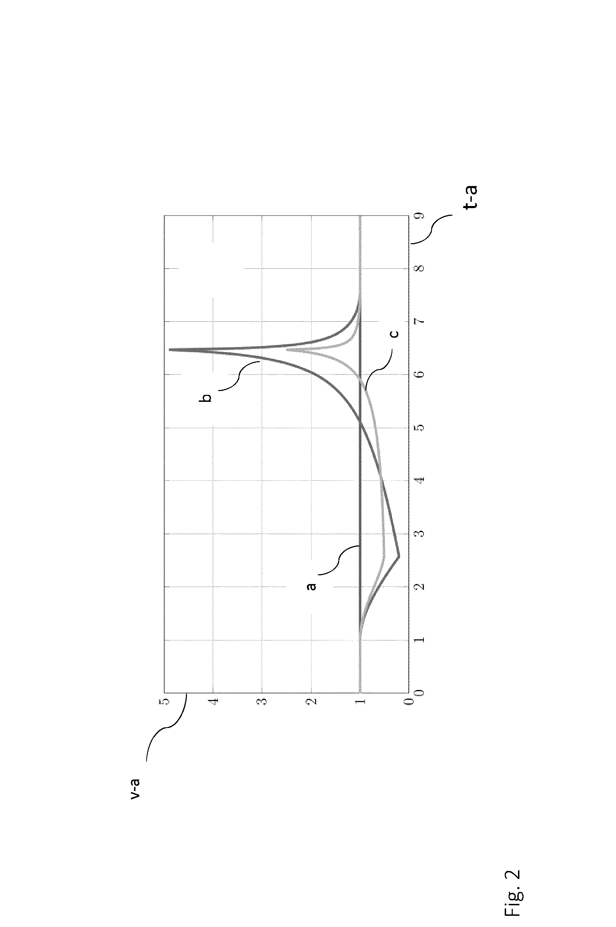

Figur 3 zeigt die resultierenden Beschleunigungsverläufe (Beschleunigungsachse a-a über Zeitachse t-a), die bei den Geschwindigkeitsverläufen an Vorderrad A, Hinterrad B und Mast C auftreten. Im Bereich, in dem das Hinterrad B die Kurve durchfährt, tritt eine starke Überhöhung in der Beschleunigung b' des Hinterrads B und der Beschleunigung c' des Masts C auf. Die Beschleunigung a' am Vorderrad ist konstant null. Die über der Zeit t auftretenden anteiligen Beschleunigungen in Richtung des Regalbediengerätes c'2 und senkrecht dazu c'1 sind in Figur 4 dargestellt. Sie sind durch die Kinematik festgelegt. Bei einer konstanten Geschwindigkeit des Vorderrads A steigt die Beschleunigung senkrecht zum Mast stark an.

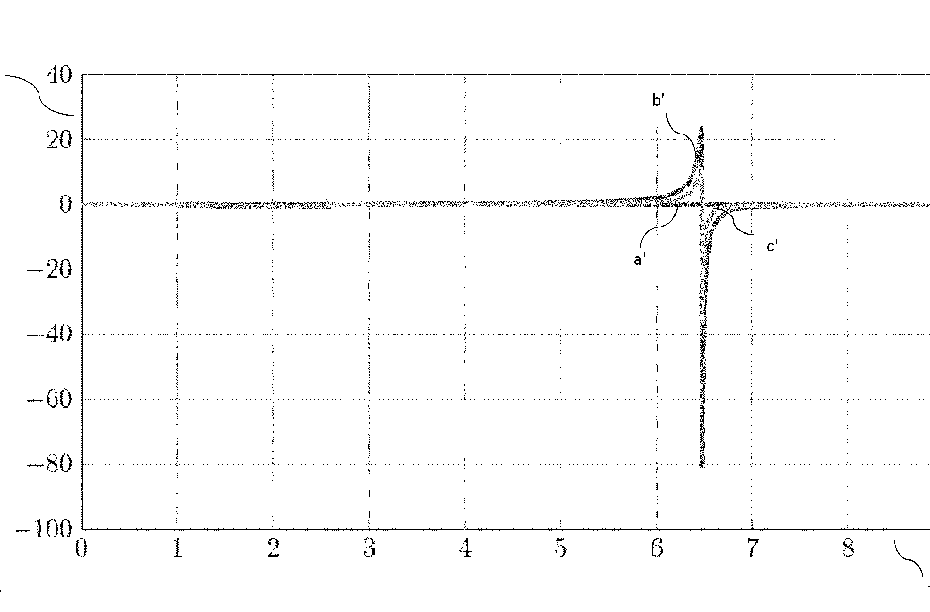

Figur 5 zeigt die Geschwindigkeitsverläufe, die sich bei einem ersten Ausführungsbeispiel ergeben, bei dem am Mast C als virtueller Punkt VP des Regalbediengerätes 12 eine konstante Geschwindigkeit f vorgegeben wird. Entsprechend ergeben sich an Vorderrad A und Hinterrad B Schwankungen der herrschenden Geschwindigkeiten. Der Geschwindigkeitsverlauf d am Vorderrad A wird berechnet aus dem dem Mast C vorgegebenen konstanten Geschwindigkeitsprofil f. Dieser wird für die Vorgabe der Solldrehzahl verwendet. In die Berechnung der Solldrehzahl des Vorderrads A gehen zusätzlich die Werte des Achsabstandes zwischen Vorderrad A und Hinterrad B ein sowie des Radius der Kurve ein. Ein entsprechend gespiegeltes Profil e ergibt sich zwangsweise für die Geschwindigkeit am Hinterrad B.

In Figur 6 ist zu sehen, wie sich die Beschleunigung bei der Kurvenfahrt gemäß dem ersten Ausführungsbeispiel mit konstanter Mastgeschwindigkeit auf den Anteil in Richtung des Regalbediengerätes, d.h. parallel zur Verbindungslinie zwischen Vorderrad A und Hinterrad B, sowie auf den Anteil senkrecht dazu, d.h. in Richtung der Palette, aufteilt. Gezeigt sind in Figur 6 der Beschleunigungsverlauf f'2 in Richtung des Regalbediengerätes sowie der Beschleunigungsverlauf f'1 in Richtung der Palette. Der Beschleunigungsverlauf f'1 in Richtung der Palette ist von besonderer Bedeutung, da die hier auftretenden Beschleunigungen besonders zu Schwingungen an den beförderten Waren führen.

Der in Figur 6 gezeigte Verlauf liegt mit den Extremalwerten deutlich unter dem im Stand der Technik realisierbaren und anhand von Figur 4 gezeigten Verlauf. Der Effekt zeigt sich in einer Reduzierung der Spitzen um eine Größenordnung. Somit wirkt vorteilhaft in Richtung der Palette nur noch eine weniger starke Beschleunigung. Insbesondere werden dadurch die üblicherweise relativ niedrigen Eigenfrequenzen des Masts nicht angeregt werden. Somit kann bei gleicher insgesamt benötigter Zeitdauer für die Kurvenfahrt das Schwingungsverhalten am Mast deutlich verbessert werden. Zugleich ist dennoch kein aufwändiger Aufbau mit zusätzlich erforderlichem Antrieb, beispielsweise an Vor- und Hinterrad, erforderlich.

In einem zweiten Ausführungsbeispiel wird das Geschwindigkeitsprofil des Masts so optimiert, dass die Beschleunigungsanteile des Masts innerhalb der gesamten Kurvenfahrt entlang von konstanten Beschleunigungsgrenzen verlaufen. Hierzu wird ein numerisch optimiertes Profil verwendet werden, um die Kinematik entsprechend berücksichtigen zu können. In Weiterbildungen wird für den Mast ein optimiertes Beschleunigungsprofil, beispielsweise mit einem sinusförmigen Profil für den Beschleunigungsverlauf senkrecht zum Mast, oder ein in Hinblick auf den wirkenden Ruck optimiertes Profil verwendet.

## Patentansprüche

1. Verfahren zur Bereitstellung mindestens eines Solldrehzahlverlaufs für mindestens einen Antrieb eines schienengeführten Transportgerätes (12), insbesondere eines Regalbediengerätes, aufweisend folgende Schritte:
- Vorgabe eines Geschwindigkeitsverlaufs (f) eines virtuellen Punktes (VP) des schienengeführten Transportgerätes (12);
- wobei eine Kurve durch das schienengeführte Transportgerät (12) mittels eines Vorderrads (A) und eines Hinterrads (B) derart durchlaufbar ist, dass der virtuelle Punkt (VP) im Wesentlichen horizontal versetzt zu einem Schienenführungssystems liegt;
- Ermittlung des mindestens einen Solldrehzahlverlaufs in Abhängigkeit von dem Geschwindigkeitsverlauf (f) und einer Relativposition von dem virtuellen Punkt (VP) zu einer von dem Antrieb angetriebenen Komponente des schienengeführten Transportgerätes (12), einer Schienengeometrie und einem Achsabstand.

2. Verfahren nach Anspruch 1, wobei der virtuelle Punkt (VP) einer Position des Schwerpunktes des schienengeführten Transportgerätes (12) abgebildet auf eine Verbindungslinie zwischen Vorderrad (A) und Hinterrad (B) entspricht.

3. Verfahren nach Anspruch 1 oder 2, wobei der virtuelle Punkt (VP) einer Position des Schwerpunktes eines Masts des schienengeführten Transportgerätes (12) abgebildet auf eine Verbindungslinie zwischen Vorderrad (A) und Hinterrad (B) entspricht.

4. Verfahren nach einem der vorstehenden Ansprüche, wobei der virtuelle Punkt (VP) einer Position eines Ansatzpunktes eines Masts an einer mechanischen Verbindungsachse zwischen Vorderrad (A) und Hinterrad (B) entspricht.

5. Verfahren nach einem der vorstehenden Ansprüche, wobei der Geschwindigkeitsverlauf (f) des virtuellen Punktes (VP) als Verlauf mit konstantem Geschwindigkeitsbetrag vorgegeben wird.

6. Verfahren nach einem der vorstehenden Ansprüche, wobei der Solldrehzahlverlauf einem Rad des schienengeführten Transportgerätes (12), insbesondere einem Vorderrad (A) oder einem Hinterrad (B), als angetriebene Komponente ausgegeben wird.

7. Verfahren nach einem der vorstehenden Ansprüche, wobei ein für den virtuellen Punkt (VP) optimierter Geschwindigkeitsverlauf ermittelt wird unter Berücksichtigung von Beschleunigungsgrenzen einer Beschleunigung des virtuellen Punktes (VP).

8. Verfahren nach einem der vorstehenden Ansprüche, wobei ein für den virtuellen Punkt (VP) optimierter Geschwindigkeitsverlauf ermittelt wird unter Berücksichtigung von Ruckbegrenzungen des virtuellen Punktes (VP).

9. Verfahren nach einem der vorstehenden Ansprüche, wobei eine Drehzahl an der angetriebenen Komponente aus der Umrechnung des Solldrehzahlverlaufs auf einen Motor unter Berücksichtigung der Beschleunigungsgrenzen und/ oder der Ruckbegrenzungen resultiert.

10. Verfahren nach einem der vorstehenden Ansprüche, wobei ferner eine weitere angetriebene Komponente des schienengeführten Transportgerätes (12), insbesondere zusätzlich zu einem Vorderrad (A) ein Hinterrad (B) oder zusätzlich zu einem Hinterrad (B) ein Vorderrad (A), vorgesehen ist und ein weiterer Solldrehzahlverlauf für einen weiteren Antrieb der weiteren angetriebenen Komponente aus dem Solldrehzahlverlauf des Antriebs, der Schienengeometrie und dem Achsabstand ermittelt wird.

11. Verfahren nach einem der vorstehenden Ansprüche, wobei ferner eine weitere angetriebene Komponente des schienengeführten Transportgerätes (12), insbesondere zusätzlich zu einem Vorderrad (A) ein Hinterrad (B) oder zusätzlich zu einem Hinterrad (B) ein Vorderrad (A), vorgesehen ist und ein weiterer Solldrehzahlverlauf aus dem Geschwindigkeitsverlauf (f) und einer Relativposition von dem virtuellen Punkt (VP) zu der weiteren angetriebenen Komponente des schienengeführten Transportgerätes (12), einer Schienengeometrie und einem Achsabstand ermittelt wird.

12. Steuerungseinrichtung zur Bereitstellung mindestens eines Solldrehzahlverlaufs für mindestens einen Antrieb eines schienengeführten Transportgerätes (12), ausgebildet und eingerichtet zum:
- Erhalten eines vorgegebenen Geschwindigkeitsverlaufs (f) eines virtuellen Punktes (VP) des schienengeführten Transportgerätes (12);
- wobei eine Kurve durch das schienengeführte Transportgerät (12) mittels eines Vorderrads (A) und eines Hinterrads (B) derart durchlaufbar ist, dass der virtuelle Punkt (VP) im Wesentlichen horizontal versetzt zu einem Schienenführungssystems liegt,
- Ermitteln des mindestens einen Solldrehzahlverlaufs in Abhängigkeit von dem Geschwindigkeitsverlauf (f) und einer Relativposition von dem virtuellen Punkt (VP) zu einer von dem Antrieb angetriebenen Komponente des schienengeführten Transportgerätes (12), einer Schienengeometrie und einem Achsabstand.

13. Steuerungseinrichtung nach Anspruch 12, ferner ausgebildet und eingerichtet zum Durchführen des Verfahrens nach einem der Ansprüche 2 bis 11.

14. Computerprogramm, umfassend Befehle, die bei der Ausführung des Programms durch einen Computer diesen veranlassen, das Verfahren nach einem der Ansprüche 1 bis 11 auszuführen, wobei das Computerprogramm insbesondere auf einer virtuellen Steuerung zur Ausführung gebracht wird.
